# FASCICULE DE BREVET EUROPEEN

(11) **EP 1 152 615 B1**
(45) Date de publication et mention de la délivrance du brevet: **14.05.2008**
(21) Numéro de dépôt: 01400806.4
(22) Date de dépôt: 28.03.2001
(51) Int. Cl.: H04N 7/16, H04N 5/00

(54) **Procédé de configuration d'un récepteur/décodeur de télévision**
Verfahren zur Konfiguration eines Fernseh- Dekodier/Empfänggeräts
Method for configuring a television decoder/receiver

(30) Priorité: 26.04.2000 FR 0005331
(43) Date de publication de la demande: 07.11.2001
(73) Titulaire: Sagem SA, 75015 Paris (FR)
(72) Inventeur: Cuoq, Jean Noel, 92150 Suresnes (FR)
(74) Mandataire: Schmit, Christian Norbert Marie

(56) Documents cités:
- WO-A-98/56180
- US-A- 5 818 935

## Description

L'invention a pour objet un procédé de configuration d'un récepteur/décodeur de télévision. Le domaine de l'invention est celui des boîtiers d'extension pour poste de télévision. Ces boîtiers sont aussi connus sous le nom de STB ( Set Top Box ). Le rôle d'un tel boîtier est de produire des signaux vidéo, susceptibles d'être affiché par un poste de télévision, en fonction d'autres signaux reçus par le boîtier. Les signaux vidéo produits peuvent être numériques ou analogiques, cela en fonction du poste de télévision auquel le boîtier est connecté. Dans la pratique ces boîtiers peuvent être intégrés au téléviseur et non constituer un appareil à part. Tous les éléments du boîtier sont alors intégrés dans le téléviseur et coopèrent avec les moyens du téléviseur.

Un but de l'invention est de limiter le nombre de boîtiers connecté à un poste de télévision. De même dans le cas de l'intégration des fonctionnalités de boîtiers dans un poste de télévision on cherche à limiter le nombre d'éléments constituant le poste de télévision.

Un autre but de l'invention est de permettre une configuration simple d'un tel boîtier sur le site où il est utilisé.

Un autre but de l'invention est de réduire l'infrastructure nécessaire à l'exploitation de ces boîtiers par l'opérateur qui les distribuent.

Dans l'état de la technique des boîtiers récepteur/décodeur de télévision sont principalement distribués par des opérateurs de télévisions privés. Ces opérateurs de télévisions diffusent des émissions via des moyens de production de signaux hertziens qui peuvent être reçus par les boîtiers récepteur/décodeurs. Chaque opérateur possède des moyens de diffusion qui lui sont propre. Lorsqu'un utilisateur souhaite s'abonner à un opérateur de télévision, il doit donc faire l'acquisition d'un boîtier spécifique pour cet opérateur.

A l'heure actuelle il existe deux modes de diffusion principaux. Ces modes de diffusion sont le satellite et le câble. A l'avenir il n'est pas exclu que des émissions de télévision soient diffusées par Internet. En effet les débits des moyens d'accès à Internet sont en constante augmentation, il est donc probable que ces moyens permettent bientôt se diffuser de la vidéo animée. Bientôt cette vidéo aura une qualité suffisante pour permettre la diffusion de programme de télévision.

Une fois qu'un l'utilisateur a acquis un boîtier, il le connecte à sa télévision et, la plupart du temps, à une parabole afin de recevoir les signaux émis par un satellite utilisé par l'opérateur de télévision auquel l'utilisateur est abonné. L'utilisateur a souscrit un abonnement auprès d'un opérateur. Le boîtier de l'utilisateur est configuré en fonction de cet abonnement. Les paramètres de configuration du boîtier parviennent à l'utilisateur, soit par courrier soit via le flux de télévision. Si les paramètres parviennent à l'utilisateur par courrier, l'utilisateur doit alors les saisir pour les enregistrer dans le boîtier. Cette saisie se fait via un clavier connecté au boîtier. Cette opération doit être répétée périodiquement. En effet la plus part du temps les abonnements sont mensuels, il faut donc renouveler le paramétrage du boîtier tous les mois.

Si les paramètres de configuration parviennent à l'utilisateur via le flux de télévision, alors les paramètres sont directement décodés et pris en compte par le boîtier. L'utilisateur n'intervient plus dans cette opération. La séquence de mise à jour de la configuration, donc de diffusion des paramètres, reste cependant au moins mensuelle. Le problème apparaît alors pour l'opérateur de télévision. Il faut en effet que l'opérateur de télévision introduise dans le flux de télévision des informations relatives à la configuration de tous les boîtiers que possèdent ses abonnés. Cela constitue une quantité d'informations importantes.

Le problème est encore plus crucial dans le cas de boucle local. C'est à dire qu'une tête de station locale reçoit un flux de télévision depuis un satellite et redistribue ce flux sur une boucle local de type câblée. Les modulations utilisées pour la transmission satellite et pour la transmission sur la boucle locale ne sont pas les mêmes. Le gérant de la boucle locale doit donc s'assurer d'une transmodulation du flux du signal de télévision. Le gérant de la boucle local doit aussi assurer l'introduction dans ce flux des paramètres de configuration de tous les boîtiers connectés à la boucle locale. Le coût des moyens à mettre en oeuvre pour l'introduction de ces paramètres dans le flux de télévision est en général prohibitif par rapport au nombre d'abonnés connectés à la boucle local. Cela constitue un frein au développement des opérateurs, notamment dans les régions de faible densité de population, ou de faible distribution de boîtiers récepteur/décodeur.

Enfin ce mode de diffusion des paramètres de configuration des boîtiers récepteur/décodeur pour simple qu'il soit, ne permet pas une gestion souple des abonnements. Principalement la plupart des abonnements sont mensuels. De plus l'utilisateur n'a pas un choix de formule d'abonnement très grand. Par exemple il est obligé de prend tout un bouquet de chaînes alors que seul certaines d'entre elles l'intéresse vraiment. En effet pour permettre une gestion plus fine des abonnements il faudrait transmettre, et donc introduire dans un flux de télévision, un grand nombre d'informations. De telles opérations ne se font pas sans un coût. De plus les introductions réduisent le débit utile utilisable pour la diffusion d'émissions.

L'invention résout ces problèmes en utilisant un boîtier récepteur/décodeur de télévision multi opérateur et doté de capacité de connexion à un réseau télématique. Les paramètres de configurations du boîtier récepteur/décodeur sont alors reçus via le réseau télématique. Ces paramètres sont transmis dans une forme cryptée. Lorsque les paramètres sont reçus par les boîtiers ils sont décryptés et sauvegardés dans une mémoire de configuration. De lors lorsque l'utilisateur du boîtier souhaite visionner une émission reçue par le boîtier, le boîtier consulte sa configuration pour savoir si l'utilisateur à effectivement les droits pour visionner cette émission.

Un simple envoi d'un message de configuration au boîtier récepteur/décodeur, via le réseau télématique, permet donc de configurer le boîtier. Cette configuration peut donc avoir lieu de manière fréquente et ou périodique, ou à chaque fois que l'utilisateur du boîtier le souhaite. En particulier, si le réseau télématique est le réseau Internet, il est possible que les opérateurs de télévision propose à l'utilisateur de boîtier de configurer lui-même sont boîtier. L'utilisateur se connecte alors à un site d'un opérateur, et choisit les options qu'il souhaite pour son boîtier. Ces options peuvent être par exemple, de visualiser un ensemble de chaîne, ou une émission particulière, ou un film particulier. Une fois ces options choisies, et les droits correspondant à ces options acquittées, l'opérateur émet alors un message de configuration vers le boîtier de l'utilisateur. Le boîtier est alors configuré conformément au souhait de l'utilisateur.

De même dans le cas d'un abonnement classique, c'est à dire mensuel, le boîtier peut être muni d'un programme grâce auquel il se connecte régulièrement, via un réseau télématique, pour interroger un serveur d'un opérateur. Ce serveur renseigne le boîtier sur l'état de l'abonnement de l'utilisateur. Le serveur envoi alors un message de configuration au boîtier.

L'invention à donc pour objet un procédé de configuration d'un récepteur/décodeur de télévision à opérateurs de télévision multiple tel que revendiqué par la revendication 1.

L'invention sera mieux comprise à la lecture de la description qui suit et à l'examen des figures qui l'accompagne. Ces figures sont présentées à titre indicatif et nullement limitatif de l'invention. Les figures montrent :
Figure 1 : Une illustration de moyens utiles pour la mise en oeuvre du procédé selon l'invention.
Figure 2 : Une illustration d'étapes du procédé selon l'invention.

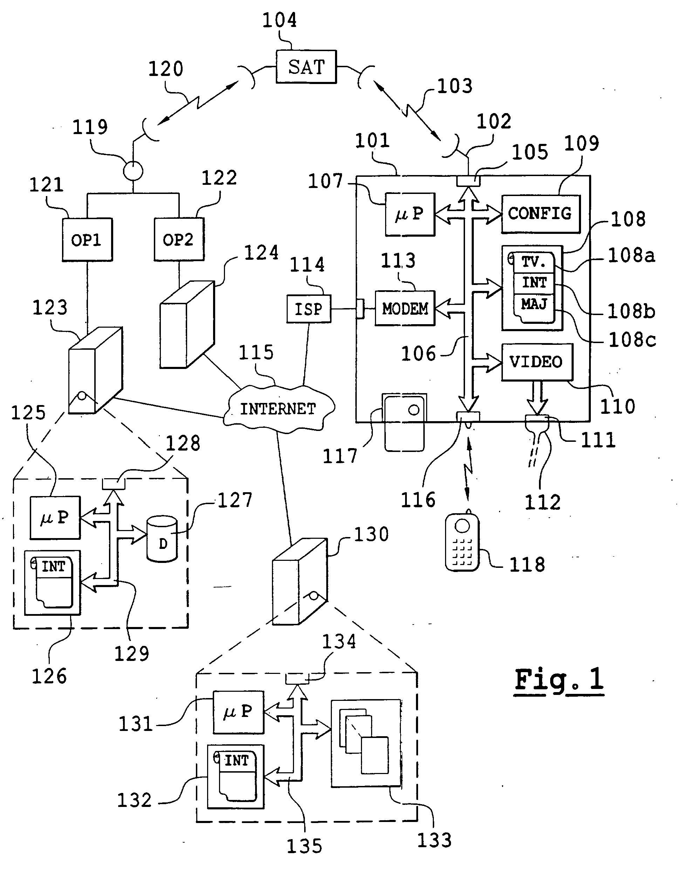

La figure 1 montre un boîtier 101 récepteur/décodeur de télévision. Le boîtier 101 comporte une antenne 102 qui lui permet d'établir une liaison 103 hertzienne avec un satellite 104. L'antenne 102 est connectée à un circuit 105 qui convertie des signaux reçues par l'antenne 102 en signaux numériques. Les signaux numériques sont stockés dans une mémoire de circuit 105. Cette mémoire du circuit 105 peut être lue via un bus 106.

Dans la description qui suit, on appel un bus un ensemble de fils ou de pistes qui comporte ces éléments en nombre suffisant pour assurer la transmission de signaux d'adresses, de données, d'interruptions, de commandes, d'horloges et d'alimentations.

Le boîtier 101 comporte aussi un microprocesseur 107 connecté au bus 106. Lorsqu'on prête des actions au microprocesseur 107, celles ci sont exécutées sous le contrôle de codes d'instructions contenus dans une mémoire 108, elle aussi connectée au bus 106. La mémoire 108 comporte plusieurs zones dont certaines sont représentées sur la figure 1. Parmi les zones non représentés en peut citer des zones de travail et des zones de stockage de données. Ces zones sont utilisées lors de l'exécution de programmes par le microprocesseur 107.

La mémoire 108 comporte une première zone 108a de télévision. La zone 108a comporte des codes instructions qui commande le microprocesseur 107 lorsque celui ci décrypte des données produites par les circuits 105. Les données numériques décryptées sont utilisées par le microprocesseur 107 pour produire des image, grâce à des codes instructions de la zone 108a. Les images produites correspondent à une émission reçue par le boîtier 101. Le microprocesseur 107, sous le contrôle de code instruction de la zone 108a, lit la mémoire des circuits 105, ainsi que le contenue d'une mémoire 109 de configuration. La mémoire 109 est connecté au bus 106. Le contenue de la mémoire 109 permet au microprocesseur 107 de déterminer si le microprocesseur 107 peut ou ne peut pas décoder les informations qu'il lit dans la mémoire 105. Le contenu de la mémoire 109 sert aussi comme microprocesseur 107 pour sélectionner certaines informations décodées par le circuit 105. Lorsque le microprocesseur 107 a sélectionné les informations utiles, il produit une image et écrit cette image dans une mémoire 110 vidéo connectée au bus 106. La mémoire 110 est connectée à un port 111 de sortie. Sur le port 111 ont peut connecter, par exemple, une prise 112 péritel en direction d'un appareil de visionnage. On peut prendre comme appareil de visionnage un téléviseur par exemple. D'autres appareils sont cependant possibles. Le port 111 comporte des circuits pour produire des signaux vidéo analogiques à partir du contenu de la mémoire 110.

La mémoire 108 comporte une zone 10Bb qui comporte des codes instructions qui commande le microprocesseur 107 lorsque celui ci exécute des actions en rapport avec un accès au réseau Internet. Dans la présente description on fera toujours référence au réseau Internet comme exemple de réseau télématique. Cependant il est envisageable d'appliquer le procédé selon l'invention à un autre réseau télématique. Les codes instructions de la mémoire 108b correspondent à des programmes de gestion d'une boîte a lettre électrique, et d'un navigateur sur le réseau Internet. Ces deux fonctions sont bien connues. La première permet de créer, d'envoyer, de recevoir et de gérer des messages électroniques. La seconde fonction permet de ce connecter au réseau Internet pour visiter les différents sites qui si trouvent, chaque site étant hébergé sur un serveur. L'ensemble de serveurs interconnectés et les moyens qui permettent d'y accéder, constitue le réseau Internet.

Un site Internet est visité depuis un appareil local. L'appareil local comporte des moyens de connexion à Internet, des moyens d'interprétation de fichiers a un format html (hypertext language markup). Un site Internet est stocké, ou hébergé, sur un serveur distant connecté au réseau internet. Un site est un ensemble de fichiers au format html. L'interprétation d'un fichier html par un logiciel de navigation, ou navigateur, conduit à l'affichage d'une page web sur un écran. Chaque fichier html décrit des liens vers d'autres fichiers. Ces liens sont mis en évidence lors de l'affichage de la page web. Ces liens peuvent être sélectionnés. Les autres fichiers sont:
- des fichiers au format html, dans ce cas la sélection du lien déclenche la transmission et l'affichage des informations de ce fichier
- des fichiers à un autre format, dans ce cas la sélection du lien déclenche la transmission et l'enregistrement du fichier sur une unité de stockage locale.

Les liens sont séleçtionnés à l'aide d'un dispositif de pointage, par exemple une souris, coopérant avec l'appareil local et l'écran. Le fait de sélectionner un lien constitue une action de navigation. Naviguer sur Internet c'est utiliser un logiciel de navigation.

Se connecter à un site c'est:
- établir une liaison entre l'appareil local et le serveur distant hébergeant le site,
- télécharger depuis le serveur, vers l'appareil local, des fichiers correspondant au site,
- interpréter, pour visualisation, les fichiers téléchargés.

Un site est identifié sur le réseau par une adresse (URL).

En général un fichier au format html correspond à une page web. Cependant une page web peut être le résultat de l'interprétation de plusieurs fichiers au format html compris dans un fichier html maître.

Un fichier au format html peut contenir la description d'un formulaire. Un formulaire comporte des champs qui peuvent être renseignés par une personne visualisant la page web contenant le formulaire. Un formulaire contient aussi un bouton de validation du formulaire. La sélection de ce bouton provoque une action décrite dans la fichier au format html. Cette action consiste le plus souvent à exécuter un programme qui traite les informations saisies via le formulaire. Ce programme peut être exécuté par l'appareil local, ou le serveur distant mais dans ce cas les informations du formulaire doivent être préalablement envoyées depuis l'appareil local vers le serveur distant.

Le mémoire 108 comporte une zone 108c qui comporte des codes instructions qui commande le microprocesseur 107 lorsqu'il exécute des étapes du procédé selon l'invention.

Le boîtier 101 comporte aussi un modem 113 connecté au bus 106. Le modem 113 est commandé par le microprocesseur 107. Le modem 113 permet de connecter le boîtier 109 au réseau téléphonique commuté. On peut ainsi relier le boîtier 101 à un fournisseur d'accès à Internet 114. Un fournisseur d'accès à Internet ( FAI ou ISP) permet à des particuliers d'accéder au réseau Internet. Pour cela l'ISP met à la disposition des particuliers, via les réseaux téléphoniques commutés par exemple, des infrastructures matérielles qui permettent aux particuliers d'accéder au réseau Internet 115.

Dans l'exemple décrit en considère que le boîtier 101 est connecté au réseau téléphonique commuté. Dans la pratique à la place du modem 113 analogique, il peut y avoir un modem numérique pour ce connecter au réseau numérique à intégration de service. Il est aussi envisageable que la liaison au réseau télématique du boîtier 101 se fasse via un réseau câblé, ou tout autre réseau permettant d'accéder à Internet.

Le boîtier 101 comporte aussi des circuits 116 de réception de signaux infrarouge, ainsi qu'un lecteur 117 de carte à puce. Les éléments 116 et 117 sont connecté au bus 106. Le circuit 116 permet à un utilisateur du boîtier 101 de commander ce boîtier via une télécommande 118 infrarouge. Dans un exemple préféré, cette télécommande comporte au moins un clavier et un dispositif de pointage. Ces éléments sont utiles pour la navigation sur Internet ainsi que la commande du boîtier 101.

Le lecteur 117 sert soit à effectuer des paiements par carte bleue via le boîtier 101, soit à introduire des microcircuits montés sur carte et correspondant à différents opérateurs de télévision. Il est possible dans une variante de l'invention le boîtier 101 comporte plusieurs lecteurs de carte à puce.

La figure 1 montre aussi une station 119 d'émission. Cette station établie une liaison 120 avec le satellite 104. La station 119 est connectée à deux opérateurs 121 et 122 de télévision. Chaque opérateur 121 et 122, comporte des moyens pour produire des signaux de télévisions qui sont diffusés via la station 119 et le satellite 104. Ces moyens sont connus en eux même. Chaque opérateur, 121 et 122, possède un serveur 123, respectivement 124. Les serveurs 123 et 124 sont connecté au réseau 115 Internet. Ces serveurs hébergent les sites des opérateurs 121 respectivement 122. II est possible, dans une variante de l'invention, que les sites des opérateurs 121 et 122 soient hébergés sur le même serveur, ou sur plusieurs serveurs, autre les serveurs 123 et 124.

On ne décrit que le serveur 123, le serveur 122 étant identique pour les moyens qu'il comporte et les fonctions qu'il remplit. Le serveur 123 comporte un microprocesseur 125, une mémoire 126, une unité 127 de stockage et des circuits 128 d'interface avec le réseau 115 Internet. La mémoire 126 comporte des codes d'instruction qui commandent le microprocesseur 125 lorsqu'il effectue des actions. La mémoire 126 comporte une zone 126a qui comporte des codes instruction de l'interface logicielle du serveur 123 avec le réseau 115 Internet. Dans la pratique les codes de la zone 126a peuvent être un moteur HTML par exemple. ( HTML = Hypertexte Langage Markup.) L'unité 127 de stockage comporte la description par exemple au format HTLM, du site de l'opérateur 121. De plus unité de stockage 127 comporte aussi une description de prestations offertes par l'opérateur 121. L'ensemble de ces prestations est mis en forme et présenté via un site Internet et des pages HTLM. Les éléments 125 à 128 sont connectés par un bus 129.

La figure 1 montre aussi un serveur 130 indépendant connecté au réseau 115 Internet. Le serveur 130 comporte des éléments 131 à 135 identiques aux éléments 125 à 129 respectivement. Une différence entre le serveur 130 et le serveur 123 est dans le fait que l'unité 133 comporte la description, au format HTLM par exemple, de plusieurs sites hébergés par le serveur 130. Les sites décrits dans la mémoire 133 ne comporte pas les descriptions de toutes les prestations de l'opérateur 121. Cependant certains sites décrits dans la mémoire 133 peuvent contenir des descriptions de certaines prestations liées à l'opérateurs 121 de télévision connectée au réseau Internet, et faisant des offres via ce réseau. Il est aussi possible que des offres que l'on trouve sur le serveur 120 indépendant ne soient pas sur le serveur 123 de l'opérateur 121. Il s'agit dans ce cas d'offres que l'opérateur 121 de télévision permet au titulaire du site hébergé sur le serveur 130 de faire en son nom.

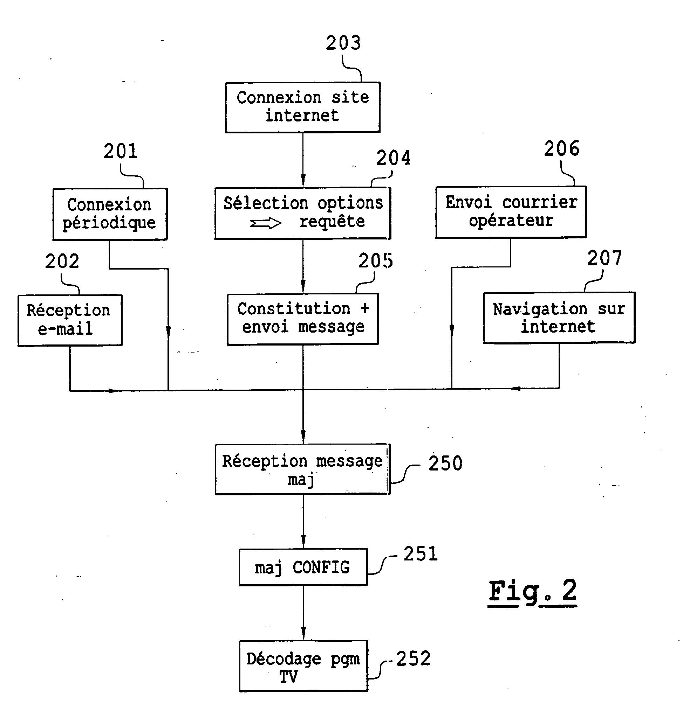

La figure 2 illustre le fait que le boîtier 101 peut recevoir un message de configuration de plusieurs façons distinctes. Une première façon d'obtenir un message de configuration et une connexion périodique, ou régulière, du boîtier 101 récepteur/décodeur via le réseau 115 télématique pour mettre à jour la mémoire 109 de configuration. Il s'agit d'une étape 201. Dans l'étape 201, le microprocesseur 107, sous le contrôle de code instruction de la zone 108c, commande le modem 113 pour que celui-ci établisse une connexion, via L'ISP 114 et le réseau 115 Internet, avec un opérateur auquel est abonné l'utilisateur du boîtier 101. Des informations concernant des abonnements de l'utilisateur du boîtier 101, ainsi que les adresses Internet des opérateurs, correspondants sont contenus dans la mémoire 109 de configuration. Ces renseignements pourraient être contenus dans une autre mémoire, ou un registre, sans que ce l'affecte le procédé son invention. Il suffit que le microprocesseur sache où aller chercher cette information. La mémoire de configuration comporte d'autre part des informations permettant d'identifier le boîtier ainsi que l'utilisateur du boîtier.

Dans notre exemple le boîtier 101 établie une connexion avec le serveur 123, l'utilisateur du boîtier 101 ayant contracté un abonnement avec l'opérateur 121. Une fois cette connexion établie le microprocesseur 107 constitue une requête R1 contenant un champ de commande, et un champ d'identification de l'abonné. Le champ de commande comporte un code instruction indiquant que l'émetteur de la requête R1 souhaite recevoir des informations relativement aux abonnements correspondant à l'abonné identifié par le champ abonné, de la requête R1.

Cette requête R1 une fois constituée le microprocesseur 107 l'émet en direction du serveur 123. Dans la pratique l'émission d'une requête par le microprocesseur se fait comme suit: Le microprocesseur transmet, via le bus 106, des informations numériques constituant la requête. Ces informations numériques sont modulées par le modem 113 Les informations modulées sont envoyées sur le réseau 115 via l'ISP 114. Le réseau 115 route ces informations jusqu'au destinataire final. Cette requête sera traitée par le microprocesseur 125. Le microprocesseur 125 parcourt la mémoire 127 jusqu'à ce qu'il trouve le renseignement correspondant à l'abonné identifié par la requête R1. Une fois ces renseignements trouvés le microprocesseur 125 les met en forme, dans un message de configuration, et les transmettre au boîtier 101. Le microprocesseur 125 constitue donc ainsi un message de configuration. Les informations du message de configuration sont cryptés. La transmission du message de configuration se fait par une méthode analogue à celle employée pour la transmission de la requête R1.

Il y a plusieurs formes de cryptage envisageable. Soit un cryptage sous forme de clef publique, le serveur 123 connaissant la clef publique alors le boîtier 101 dispose la clef privée. La clef de cryptage, ou les moyens de décryptage peuvent aussi être contenus dans une carte à puce à introduire dans le lecteur 117 avant de pouvoir procéder au décryptage.

Une fois constitué le message de configuration peut soit être envoyé directement, soit envoyé via un E-Mail au cours d'une autre connexion du boîtier 101 au réseau 115 Internet. L'interrogation régulière du serveur 123 par le boîtier 101 est paramétrable, soit par l'utilisateur du boîtier, soit par l'opérateur ayant fournit le boîtier 101 à l'utilisateur. Le paramétrage revient à fixer la fréquence de l'interrogation. On passe de l'étape 201 à une étape 250 de réception du message de configuration.

La figure 2 montre aussi une étape 202 de réception d'un E-Mail. Dans l'étape 202 le boîtier 101 interroge son fournisseur 114 d'accès à Internet sur l'état de sa boîte à lettre électronique. Cette interrogation peut être déclenchée par l'utilisateur du boîtier 101, via à la télécommande 118, ou s'effectuer de manière périodique. La période de cette interrogation est alors paramétrable par l'utilisateur du boîtier 101.

Dans l'étape 202 le microprocesseur 107, commandé par des codes instruction de la zone 108b, ce connecte soir au fournisseur 114, soit à un serveur du réseau 115 Internet qui gère une boîte à lettre électronique de l'utilisateur du boîtier 101. Dans notre exemple on considère que cette boîte à lettre est gérée par le fournisseur 114 d'accès.

L'appareil 101 est en mesure de rapatrier, depuis le fournisseur 114 d'accès à Internet, les messages d'une boîte à lettre électronique. Les paramètres décrivant cette boîte à lettre électronique sont enregistrés dans la mémoire 109 de configuration.

La mémoire 109 contient tous les paramètres de configuration du boîtier. Cela évite de surcharger le dessin en faisant référence à de trop nombreuses mémoires. Cependant il est possible que chacun des paramètres de configuration contenus dans la mémoire 109 soit stocké dans une mémoire indépendante ou un registre. Cette mémoire ou ce registre est alors connecté au bus 106. Lorsque le microprocesseur 107 a rapatrié tous les messages correspondant à la boîte à lettre électronique décrite dans la mémoire 109, il explore une zone de ces messages correspondant à l'objet du message. Ci l'un des messages à pour objet un message de configuration, le microprocesseur 107 commandé par des codes instructions contenus dans la zone 108c, extrait le contenue de ce message électronique et s'en sert pour mettre à jour la mémoire 109 de configuration. Pour que ce traitement soit déclenché, il faut que la zone objet du message électronique comporte un mot clef prédéfini.

La réception d'un tel E-Mail constitue une mise à jour aléatoire de la mémoire 109. Elle est dite aléatoire car elle n'a pas de date précise et prédéfinie dans le temps. La provenance d'un tel message peut être multiple. Elle peut provenir d'un opérateur de télévision qui souhaite faire une démonstration les prestations qu'il propose. II peut aussi s'agir d'un cadeau adressé à l'utilisateur de l'appareil 101 par un ami, ou il peut s'agir d'un don effectué par une personne souhaitant s'attirer les bonnes grâces de l'utilisateur du boîtier 101.

On passe de l'étape 202 à l'étape 250 de réception du message de configuration.

La figure 2 montre une étape 203 de connexion à un site Internet. Dans cette étape une personne se connecte au site Internet de l'opérateur 121. Il s'agit bien sur d'un exemple. Cette connexion est effectuée via le réseau 115. Dans la description cette connexion est décrite comme étant réalisée à partir du boîtier 101. Dans la pratique cette connexion peut être effectuée à partir de n'apporte quel appareil doté de moyen lui permettant de naviguer sur le réseau Internet 115. Le microprocesseur 107, commandé par des codes d'instructions contenues dans la zone 108b, établie une liaison avec le serveur 123. Cette liaison s'effectue via le réseau 115 Internet et le fournisseur 114 d'accès à ce réseau. Les codes instructions exécutées par le microprocesseur 107 sont ceux correspondant au navigateur. Le microprocesseur 107 reçoit des informations au format HTML. Il utilise ces informations pour produire une image qu'il écrit dans la mémoire 110 vidéo. Cette mémoire est lue par les circuits 111 et transmise à l'appareil de visualisation connecté au boîtier 101. L'utilisateur du boîtier 101 est donc en mesure de visualiser des pages contenues dans le site de l'opérateur 121. Ces pages sont décrites dans la mémoire 127, sous formes de fichiers HTML. Elles sont transmises au boîtier 101 suite à des requêtes du microprocesseur 107. Ces requêtes sont traitées par le microprocesseur 125 commandé par des codes instructions de la mémoire 126. L'utilisateur du boîtier 101 utilise le dispositif de pointage de la télécommande 118 pour naviguer dans le site de l'opérateur 121. On passe à l'étape 204 de sélection des options, et des constitutions d'une requête.

Dans l'étape 204 l'utilisateur du boîtier 101 parcourt le site de l'opérateur 123. Ce site présente à l'utilisateur un ensemble de prestations que propose l'opérateur 121. L'utilisateur peut alors sélectionner, via le site de l'opérateur 121, un certain nombre de ces prestations. La sélection de ces prestations se fait via un formulaire électronique. Les formulaires électroniques sont bien connus dans le domaine d'Internet et des fichiers au format HTLM. Lorsqu'il a terminé sa saisie, ou sélection, l'utilisateur valide cette sélection en sélectionnant sur un bouton de validation présenté par le site Internet.

On passe à une étape 205 de constitution et d'envoi du message de configuration. Dans l'étape 205, la sélection du bouton de validation a provoqué l'exécution d'un programme qui parcourt le formulaire qu'a rempli l'utilisateur afin pour déterminer les prestations que souhaite acquérir l'utilisateur. Si l'acquisition de ces prestations est soumise à l'acquittement de droits, le serveur 123 demande à l'utilisateur du boîtier 101 de s'identifier et de fournir au serveur 123 des moyens qui permettront à l'opérateur 121 de débiter l'utilisateur du boîtier 101 du montant des droits équivalents aux prestations que souhaite acquérir l'utilisateur. Cette demande est effectuée et traitée par un échange de messages entre le serveur 123 et le boîtier 101. L'acquittement de ce droit peut être effectué grâce au lecteur 117 de carte à puce dans lequel l'utilisateur introduit sa carte bleue par exemple.

Dans l'étape 205, le programme qui parcoure le formulaire est exécuté par le microprocesseur 107. Ce programme constitue donc une requête qui sera envoyée au serveur 123. En effet pour visualiser une page d'un site sur Internet, il faut d'abords télécharger les fichiers au format HTML correspondant à cette page. Lorsqu'ils sont visualisés ces fichiers sont donc enregistrés dans une mémoire du boîtier 101. La requête alors constituée par le microprocesseur 107 comporte un champ identifiant l'abonné utilisant le boîtier 101, un champ contenant l'adresse à laquelle devra être adressée la réponse à la requête, et un champ décrivant les prestations pour lequel l'abonné souhaite recevoir un message de configuration. Lorsque le serveur 123 reçoit cette requête, les droit correspondant aux prestations que souhaite acquérir l'abonné ont déjà été acquitté. Le serveur 123 constitue donc le message de configuration correspondant à cette requête et les envoie à l'adresse spécifiée dans le champ spécifiant l'adresse de réponse à la requête.

Une fois l'acquittement des droits effectué, il existe au moins deux possibilités pour l'envoi du message de configuration. Soit l'envoi du message de configuration est effectué immédiatement après l'acquittement des droits, c'est à dire au cours de la même connexion. Dans ce cas le serveur 123 connaît l'adresse à laquelle il doit envoyer le message de configuration et on passe directement à l'étape 250 de réception de messages de configuration.

Soit l'utilisateur souhaite spécifier une adresse à laquelle doit être envoyé le message de configuration. On trouve cette hypothèse dans le cas ou l'utilisateur souhaite envoyer un message de configuration à une adresse E-Mail par exemple. Par exemple l'utilisateur s'est connecté au serveur 123 depuis sont poste de travail, et il souhaite se faire envoyer le message de configuration à son domicile. Dans ce cas l'utilisateur saisi l'adresse E-Mail ou il souhaite que soit envoyé le message de configuration correspondant à sa sélection. L'utilisateur à acquitté les droits correspondant à ce message de configuration.

Dans le cas ou l'appareil avec lequel l'utilisateur se connecte au serveur 123 ne comporte par de lecteur de carte à puce, on prévoit que le payement sera effectué, par exemple par la saisie d'un numéro de carte bleu de l'utilisateur. Il existe cependant d'autres protocoles pour effectuer un acquittement de droit via un réseau de type Internet. Ces protocoles peuvent aussi être mis en oeuvre.

Parmi les prestations que peut sélectionner l'utilisateur du boîtier 101 on retrouve l'abonnement classique, à savoir l'accès à un certain nombre de chaînes pendant un certain temps. Mais on peut aussi sélectionner un film sur une chaîne donné, et une émission sur une autre. Avec le système décrit, si l'opérateur 123 présente sur son site sa grille de programme il est possible de sélectionner n'importe quelle combinaison des programmes proposés par l'opérateur. Le message de configuration crée correspondra alors à cette sélection.

Dans une variante de l'invention l'unité 127 associe un abonné et une adresse, par exemple E-Mail, et il n'est plus utile que le serveur 123 adresse un message au boîtier 101 pour savoir à quelle adresse il faut envoyer le message de configuration.

La figure 2 montre une étape 206 dans laquelle on envoi du courrier à un opérateur. Dans cette étape l'utilisateur du boîtier 101 rédige un courrier soit manuscrit, soit électronique, dans lequel il stipule quelle sont des prestations pour lequel il souhaite obtenir un message de configuration. Il joint à ce courrier des informations qui permettent à l'opérateur de débiter l'utilisateur des droits correspondant à ces prestations. L'utilisateur reçoit en réponse à ce courrier un message de configuration qui sera traité dans l'étape 250. Le message de configuration peut être envoyé par E-mail par exemple. Mais il peut aussi être obtenu lors d'une connexion périodique du boîtier 101 à cet opérateur.

La figure 2 montre une étape 207 de navigation sur Internet. Dans cette étape l'utilisateur du boîtier 101 navigue sur Internet et se connecte à un site du serveur 130. Ce site permet de recevoir un message de configuration. Par exemple il s'agit du site d'une Société qui souhaite s'attirer les bonnes grâces de l'utilisateur qui se connecte à ce site. Chaque personne se connectant à ce site on reçoit donc un message de configuration correspondant à certaines prestations d'un opérateur de télévision. Si le boîtier qu'utilise l'utilisateur est compatible avec le message de configuration, alors le message de configuration sera traité et cela permettra à l'utilisateur de profiter de la bienveillance du gérant du site.

Il se peut aussi que la transmission d'un message de configuration soit déclenchée par la sélection d'une bannière présente sur le site. Une bannière est un élément graphique décrit dans une page HTML. Cet élément graphique est généralement associé à un lien vers un autre site ou à un fichier qu'on peut télécharger. Dans ce cas la bannière est alors associée à un message de configuration.

Dans une variante de l'invention on prévoit que la sélection d'une telle bannière s'accompagne de la demande à la personne qui à sélectionnée la bannière de saisir une adresse à laquelle cette personne souhaite que soit envoyé le message de configuration.

De l'étape 207 on passe à l'étape 250.

Dans l'étape 250, le microprocesseur 107 est commandé par les codes d'instructions de la zone 108c. Le microprocesseur commence par un décrypté le message de configuration, puis il inscrit les informations qu'il contient non la mémoire 109 de configuration. C'est l'étape 251 de mise à jour de la configuration. Ces informations une série d'EMM pour Entitled Management Message (message de gestion).

Après l'étape 251 on passe à une étape 252 de décodage d'un programme de télévision. Chaque programme de télévision reçu par le boîtier 101, via la liaison 103, est associée à un ECM, pour Entitled command message (message de commande), qui caractérise le programme de télévision. Dès la réception de cette ECM le microprocesseur 107 parcourt la mémoire 109 de configuration. La mémoire 109 de configuration comporte, suite à la réception de messages de configuration, des EMM. Un EMM est un message complémentaire à un ECM. Si la mémoire 109 comporte l'EMM correspondant à l'ECM du programme que le boîtier 101 est en train de recevoir, le microprocesseur 107 est en mesure de décoder l'émission et donc de produire les images qui pourront être visualisées via la prise 112.

## Revendications

1. - Procédé de configuration d'un récepteur/décodeur de télévision à opérateurs de télévision multiple et comportant des moyens pour se connecter à un réseau télématique, de type Internet, **caractérisé en ce que** :
- on reçoit, dans le récepteur/décodeur, un message de configuration, émis avec l'autorisation d'un opérateur de télévision, par le réseau télématique, le message de configuration ayant été produit suite à la validation d'un formulaire qui peut être rempli à partir de n'importe quel appareil doté de moyens lui permettant de naviguer sur le réseau Internet,
- on met à jour une mémoire de configuration du récepteur/décodeur en fonction de données contenues dans le message de configuration,
- on décode des données reçues, d'un opérateur de télévision, par le récepteur/décodeur en fonction du contenu de la mémoire de configuration.

2. - Procédé selon la revendication 1, **caractérisé en ce qu'**on connecte régulièrement le récepteur/décodeur au réseau télématique pour mettre à jour la mémoire de configuration.

3. - Procédé selon l'une des revendications 1 ou 2, **caractérisé en ce qu'**un utilisateur du récepteur/décodeur émet une requête, vers un agent d'un opérateur de télévision, pour recevoir un message de configuration selon la requête.

4. - Procédé selon l'une des revendications 1 à 3, **caractérisé en ce que** pour composer une requête en vue recevoir un message de configuration :
- on se connecte à un site,
- on sélectionne, sur le site, des éléments pour composer la requête,
- on valide la sélection.

5. - Procédé selon l'une des revendications 1 à 4, **caractérisé en ce qu'**on se connecte à Internet en utilisant des moyens du récepteur/décodeur.

6. - Procédé selon l'une des revendications 1 à 7, **caractérisé en ce qu'**on reçoit, sur le récepteur/décodeur, de manière aléatoire des messages de configuration.

7. - Procédé selon la revendication 6, **caractérisé en ce qu'**on reçoit un message de configuration via un courrier électronique.

8. - Procédé selon la revendication 7, **caractérisé en ce que** le courrier électronique est reçu et traité automatiquement par le récepteur/décodeur pour mettre à jour la mémoire de configuration.

9. - Procédé selon l'une des revendications 1 à 8, **caractérisé en ce que** l'émission d'un message de configuration par un opérateur de télévision n'est effective qu'après la vérification que l'utilisateur du récepteur/décodeur peut se prévaloir de droits correspondant au message de configuration.

10. - Procédé selon la revendication 9, **caractérisé en ce qu'**on effectue la vérification que l'utilisateur est en possession de droits afférents au message de configuration, via le réseau télématique et des moyens de certification du récepteur/décodeur.

11. - Procédé selon l'une des revendications 1 à 10, **caractérisé en ce que** le message de configuration est crypté.

## Claims

1. A configuration method for a television receiver/decoder having multiple television operators and comprising means for connecting to a data communications' network, of the Internet type, **characterised in that**:
- A configuration message emitted by the data communications' network upon authorisation from a television operator is received in the receiver/decoder, such configuration message having been produced as a result of validating a form that can be filled out using any type of apparatus equipped with means enabling to browse the Internet,
- a configuration memory of the receiver/decoder is updated in accordance with the data contained in the configuration message,
- the data received, from a television operator, is decoded through the receiver/decoder in accordance with the contents of the configuration memory.

2. A method according to claim 1, **characterised in that** the receiver/decoder is regularly connected to the data communications' network in order to update the configuration memory.

3. A method according to claims 1 or 2, **characterised in that** a user of the receiver/decoder emits a request to a television operator agent for the purpose of receiving a configuration message in accordance with the request.

4. A method according to one of the claims 1 to 3, **characterised in that**, in order to compose a request for receiving a configuration message,
- A connection is made to a Website,
- Elements, on the Website, are selected for composing the request,
- The selection is confirmed.

5. A method according to one of the claims 1 or 4, **characterised in that** a connection is made to the Internet by using the means of a receiver/decoder.

6. A method according to one of the claims 1 to 7, **characterised in that** configuration messages are received at random on the receiver/decoder.

7. A method according to claim 6, **characterised in that** a configuration message is received via an electronic mail.

8. A method according to claim 7, **characterised in that** the electronic mail is automatically received and processed by the receiver/decoder in order to update the configuration memory.

9. A method according to claims 1 or 8, **characterised in that** the emission of a configuration message by a television operator is only effective after verification that the user of the receiver/decoder can claim due rights with regard to the configuration message.

10. A method according to claim 9, **characterised in that** a verification will be made as to whether the user is the holder of the rights pertaining to the configuration message, via the data communications' network and the certification means of the receiver/decoder.

11. A method according to one of the claims 1 or 10, **characterised in that** the configuration message is encrypted.

## Patentansprüche

1. Verfahren zur Konfiguration eines Fernsehempfängers/ - dekodierers für mehrere Fernsehbetreiber mit den entsprechenden Mitteln zum Anschließen an ein Telematiknetz vom Typ Internet, **dadurch gekennzeichnet, dass**:
- man in dem Empfänger/ Dekodierer eine Konfigurationsnachricht erhält, die mit Zustimmung eines Fernsehbetreibers über das Telematiknetz gesendet wird, wobei die Konfigurationsnachricht nach der Bestätigung eines Formulars erstellt worden ist, das auf irgendeinem Gerät ausgefüllt werden kann, mit dem man sich ins Internet einwählen kann,
- man einen Konfigurationsspeicher des Empfängers/ Dekodierers in Abhängigkeit von den Daten, die in der Konfigurationsnachricht enthalten sind, aktualisiert,
- man die im Empfänger/ Dekodierer von einem Fernsehbetreiber erhaltenen Daten in Abhängigkeit vom Inhalt der Konfigurationsnachricht entschlüsselt.

2. Verfahren nach Anspruch 1, **dadurch gekennzeichnet, dass** man den Empfänger/ Dekodierer regelmäßig mit dem Telematiknetz verbindet, um den Konfigurationsspeicher zu aktualisieren.

3. Verfahren nach einem der Ansprüche 1 oder 2, **dadurch gekennzeichnet, dass** ein Benutzer des Empfängers/ Dekodierers einen Antrag an einen Vertreter eines Fernsehbetreibers sendet, um eine Konfigurationsnachricht entsprechend des Antrages zu erhalten.

4. Verfahren nach einem der Ansprüche 1 bis 3, **dadurch gekennzeichnet, dass** man zum Verfassen eines Antrags in Hinblick auf den Erhalt einer Konfigurationsnachricht:
- eine Website anwählt,
- auf der Website die Bestandteile zum Verfassen des Antrags anwählt,
- die Anwahl bestätigt.

5. Verfahren nach einem der Ansprüche 1 bis 4, **dadurch gekennzeichnet, dass** man sich unter Verwendung der Mittel des Empfängers/Dekodierers ins Internet einwählt.

6. Verfahren nach einem der Ansprüche 1 bis 7, **dadurch gekennzeichnet, dass** man am Empfänger/ Dekodierer zufällig Konfigurationsnachrichten erhält.

7. Verfahren nach Anspruch 6, **dadurch gekennzeichnet, dass** man eine Konfigurationsnachricht per E-Mail erhält.

8. Verfahren nach Anspruch 7, **dadurch gekennzeichnet, dass** die E-Mail automatisch vom Empfänger/ Dekodierer empfangen und bearbeitet wird, um den Konfigurationsspeicher zu aktualisieren.

9. Verfahren nach einem der Ansprüche 1 bis 8, **dadurch gekennzeichnet, dass** die Sendung einer Konfigurationsnachricht durch den Fernsehbetreiber erst dann gültig ist, wenn überprüft wurde, dass der Benutzer des Empfängers/ Dekodierers seine Rechte im Zusammenhang mit der Konfigurationsnachricht geltend machen kann.

10. Verfahren nach Anspruch 9, **dadurch gekennzeichnet, dass** man über das Telematiknetz und anhand von Mitteln zur Zertifizierung des Empfängers/Dekodierers überprüft, ob der Benutzer in Besitz der Rechte im Zusammenhang mit der Konfigurationsnachricht ist.

11. Verfahren nach einem der Ansprüche 1 bis 10, **dadurch gekennzeichnet, dass** die Konfigurationsnachricht verschlüsselt ist.
